# EUROPÄISCHE PATENTSCHRIFT

(11) **EP 1 367 363 B1**
(45) Veröffentlichungstag und Bekanntmachung des Hinweises auf die Patenterteilung: **18.07.2007**
(21) Anmeldenummer: 03008947.8
(22) Anmeldetag: 16.04.2003
(51) Int. Cl.: G01C 3/08, G01S 17/32

(54) **Optoelektronischer Sensor**
Opto-electronic sensor
Capteur opto-électronique

(30) Priorität: 27.05.2002 DE 10223537
(43) Veröffentlichungstag der Anmeldung: 03.12.2003
(73) Patentinhaber: SICK AG, 79183 Waldkirch (DE)
(72) Erfinder: Breisacher, Hans-Joachim, 79353 Bahlingen (DE)
(74) Vertreter: Manitz, Finsterwald & Partner GbR

(56) Entgegenhaltungen:
- DE-A1- 2 709 577
- US-A- 5 144 263
- PATENT ABSTRACTS OF JAPAN Bd. 1996, Nr. 07, 31. Juli 1996 (1996-07-31) & JP 08 070280 A (FURUKAWA ELECTRIC CO LTD:THE), 12. März 1996 (1996-03-12)
- INTERSIL CORPORATION: "An IC Operational Transconductance Amplifier (OTA) With Power Capability"[Online] Oktober 2000 (2000-10), XP001206122 Gefunden im Internet: URL:http://www.intersil.com/data/an/an6077 .pdf> [gefunden am 2005-04-19]

## Beschreibung

Die Erfindung betrifft einen optoelektronischen Sensor mit einem Lichtsender zum Aussenden von Sendelicht, das gemäß einem Lichtsendesteuersignal moduliert ist, ferner mit einem Hochfrequenzgenerator zur Erzeugung eines HF-Steuersignals, und mit einer Modulationsschaltung zur Erzeugung des Lichtsendesteuersignals mit der Frequenz des HF-Steuersignals und mit einer einstellbaren Lichtsendeamplitude.

Ein derartiger Sensor dient beispielsweise zur Abstandsmessung anhand einer Phasenverschiebung von Reflexionslicht des modulierten Sendelichts. Die von dem Hochfrequenzgenerator vorgegebene Modulationsfrequenz liegt dabei beispielsweise im Bereich von 50 bis 100 MHz, um Abstände mit einer Genauigkeit im Millimeter-Bereich auflösen zu können.

Allerdings wird bei der Anwendung derartiger Sensoren nicht unter allen Umgebungsbedingungen die erwünschte Genauigkeit erzielt. Insbesondere bei den genannten Sensoren zur Abstandsmessung werden deshalb Maßnahmen zur Verbesserung der Genauigkeit der Bestimmung der Phasenlage des reflektierten Sendelichts getroffen; auch diese Maßnahmen führen jedoch nicht immer zu der erwünschten Messgenauigkeit.

Ein am 19. April 2005 im Internet abgerufener Artikel der Intersil Corporation: "An IC Operational Transconductance Amplifier (OTA) With Power Capability", Oktober 2000 (http://www.intersil.com/data/an/an6077.pdf) beschreibt einen Operationsverstärker mit einer Stromspiegelschaltung.

Patent Abstracts of Japan Bd. 1996, Nr. 07, 31. Juli 1996 (JP 08 070280 A) zeigt eine optoelektronische Vorrichtung mit einem Lichtsender zum Aussenden von Sendelicht, das gemäß einem Lichtsendesteuersignal intensitätsmoduliert ist. Ein Eingangssignal wird in einen Verstärker geschickt, dessen Ausgang mit einem einstellbaren Dämpfungselement verbunden ist. Das Ausgangssignal des Dämpfungselements wird mit einem Hauptverstärker weiter verstärkt und zu einer Lichtquelle geschickt, die ein entsprechend moduliertes Lichtsignal in eine optische Faser schickt. Das Eingangssignal der Lichtquelle wird zu einem automatischen Verstärkungscontroller abgezweigt, dessen Ausgangssignal zur Steuerung des einstellbaren Dämpfers verwendet wird.

Eine Aufgabe der vorliegenden Erfindung besteht darin, die Mess- und Detektionsgenauigkeit von Sensoren der eingangs genannten Art zu verbessern.

Diese Aufgabe wird mit einem optoelektronischen Sensor mit den Merkmalen des Anspruchs 1 gelöst. Unteransprüche sind auf bevorzugte Ausführungsformen gerichtet.

Insbesondere zeichnet sich ein erfindungsgemäßer optoelektronischer Sensor dadurch aus, dass zur Übermittlung des HF-Steuersignals der Hochfrequenzgenerator mit einem Eingang der Modulationsschaltung verbunden ist, dass zum Einstellen der Lichtsendeamplitude eine regelbare Stromquelle mit der Modulationsschaltung verbunden ist, dass zur Übermittlung des Lichtsendesteuersignals ein Ausgang der Modulationsschaltung mit dem Lichtsender verbunden ist, dass zur Übermittlung eines Amplitudenkontrollsignals ein Ausgang der Modulationsschaltung mit einer Regelungsschaltung verbunden ist, wobei das Amplitudenkontrollsignal in einem proportionalen Verhältnis zu der Amplitude des Lichtsendesteuersignals steht, und dass zur Regelung der Lichtsendeamplitude die Regelungsschaltung mit der Stromquelle verbunden ist.

Der Erfindung liegt die Überlegung zugrunde, dass die Genauigkeit der Bestimmung der Phasenlage des reflektierten Sendelichts letztlich auch von der Amplitude des Sendelichts bzw. von deren Konstanz abhängt. Die Amplitude des Sendelichts kann nämlich beispielsweise von Temperatureffekten unbeabsichtigt schwanken. Eine derartige Schwankung kann jedoch zu einem Empfangssignal für das reflektierte Sendelicht führen, das den erforderlichen Signal-Rausch-Abstand unterschreitet und damit die Genauigkeit reduziert.

Demgegenüber sorgt bei dem erfindungsgemäßen Sensor eine Regelungsschaltung für eine Vermeidung derartiger Messfehler und somit für eine höhere Messgenauigkeit, nämlich indem die Lichtsendeamplitude gemäß einem vorgegebenen oder vorgebbaren Soll-Wert geregelt wird. Hierfür ist die Modulationsschaltung in einen Regelkreis eingebunden, wobei die Modulationsschaltung einen Ist-Wert der Lichtsendeamplitude an einen Regler übermittelt, der ein entsprechendes Stellsignal an die Stromquelle abgibt, um die Amplitude des Lichtsendesteuersignals an den erwünschten Soll-Wert anzupassen.

Dabei dient ein Ausgang der Modulationsschaltung zur Übermittlung des Lichtsteuersendesignals an den Lichtsender. Über diesen oder einen weiteren Ausgang der Modulationsschaltung wird dem genannten Regelkreis - als ein Ist-Wert - ein Amplitudenkontrollsignal zugeführt, das in einer proportionalen und somit reproduzierbaren Beziehung zu der Amplitude des ausgegebenen Lichtsendesteuersignals steht. Dabei kann eine direkte Proportionalität mit einem positiven oder negativen Proportionalitätsfaktor, oder eine indirekte Proportionalität bestehen. Das Amplitudenkontrollsignal und das Lichtsendesteuersignal können auch hinsichtlich ihres Betrags und ihrer Phasenlage identisch sein.

Somit gewährleistet bei dem erfindungsgemäßen Sensor ein einfacher Regelkreis eine konstante Amplitude des Sendelichts bzw. ein konstantes Verhältnis der Lichtsendeamplitude zu ihrem Mittelwert (sogenannter Modulationsgrad). Dadurch wird eine fehlerhafte Ermittlung der Phasenlage des empfangenen Reflexionslichts vermieden. Somit wird bei einem Sensor zur Abstandsmessung eine höhere Genauigkeit der Abstandsbestimmung erreicht.

Um für die erläuterte Regelung der Lichtsendeamplitude einen besonders aussagekräftigen Ist-Wert der Amplitude des Lichtsendesteuersignals zu erhalten, besitzt die Regelungsschaltung vorzugsweise einen Gleichrichter, durch den das hochfrequent modulierte Amplitudenkontrollsignal der Modulationsschaltung in einen Amplituden-Ist-Wert umgewandelt wird. Dieser Amplituden-Ist-Wert steht somit ebenfalls in einem proportionalen Verhältnis zu der Amplitude des Lichtsendesteuersignals bzw. zu einem Mittelwert des Lichtsendesteuersignals. Der Amplituden-Ist-Wert ist dabei durch ein Gleichspannungssignal oder ein Gleichstromsignal gebildet, das einen besonders einfachen Vergleich mit einem zugeordneten Soll-Wert ermöglicht.

Der genannte Gleichrichter kann in einer besonders einfachen Ausführungsform eine Diode aufweisen. Vorzugsweise sind jedoch mehrere, insbesondere zwei Dioden vorgesehen, die eine temperaturkompensierte Anordnung bilden, so dass mögliche Temperaturschwankungen nicht zu einer unerwünschten Verfälschung des im Gleichrichter gebildeten Amplituden-Ist-Werts führen.

Ferner kann die Regelungsschaltung einen Regler aufweisen, der zur Regelung der Stromquelle ein Stellsignal erzeugt, und zwar in Abhängigkeit von der Abweichung eines Amplituden-Ist-Werts und einem Amplituden-Soll-Wert. Der Amplituden-Ist-Wert kann dabei von dem genannten Gleichrichter übermittelt werden, oder er kann durch das am zweiten Ausgang der Modulationsschaltung anliegende Amplitudenkontrollsignal selbst gebildet sein. Der der Regelung der Stromquelle zugrunde gelegte Amplituden-Soll-Wert kann der Regelungsschaltung über eine zugeordnete Eingabeeinrichtung - beispielsweise in Form eines Spannungswerts - zugeführt werden, oder er kann durch eine Auswerte- und Steuerschaltung - beispielsweise in Form eines Mikrocontrollers - vorgegeben werden.

Erfindungsgemäß ist zur Übermittlung des Lichtsendesteuersignals an den Lichtsender ein erster Ausgang und zur Übermittlung des Amplitudenkontrollsignals an die Regelungsschaltung ein von dem ersten Ausgang verschiedener zweiter Ausgang der Modulationsschaltung vorgesehen Dadurch kann eine unerwünschte Rückwirkung der Regelungsschaltung auf das Lichtsendesteuersignal besonders gut vermieden werden.

Die Modulationsschaltung kann auf besonders einfache und zuverlässige Weise verwirklicht werden, falls sie eine Differenzverstärkerschaltung aufweist, die eingangsseitig von dem HF-Steuersignal beaufschlagt wird und in Abhängigkeit von dem HF-Steuersignal sowie von der Stromzufuhr durch die Stromquelle das Lichtsendesteuersignal für den Lichtsender und das Amplitudenkontrollsignal für die Regelungsschaltung erzeugt.

Beispielsweise kann diese Differenzverstärkerschaltung zwei Äste aufweisen, wobei jedem Ast ein Verstärkungstransistor zugeordnet ist. Insbesondere ist es möglich, dass einem Ast der Differenzverstärkerschaltung ein erster Ausgang der Modulationsschaltung und dem anderen Ast ein zweiter Ausgang zugeordnet ist, so dass das Lichtsendesteuersignal und das Amplitudenkontrollsignal in einem gegenseitigen Abhängigkeitsverhältnis an jeweils einem der beiden Äste erzeugt werden.

Die erwünschte Proportionalität des Amplitudenkontrollsignals zu dem Lichtsendesteuersignal kann besonders einfach dadurch gewährleistet werden, dass die beiden genannten Äste der Differenzverstärkerschaltung von einer gemeinsamen Stromquelle gespeist werden.

Der erfindungsgemäße Sensor Weist zur Abstandsmessung ferner eine Auswerteschaltung auf, die die Phasenlage von reflektiertem Sendelicht relativ zu der Phasenlage des ausgesandten Sendelichts auswertet, um anhand der Phasenverschiebung den Abstand des Sensors von einem das Sendelicht reflektierenden Objekt zu ermitteln.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1: ein Blockschaltdiagramm eines erfindungsgemäßen Sensors, und
- Fig. 2: ein Schaltdiagramm einiger Komponenten, insbesondere der Modulationsschaltung des Sensors gemäß Fig. 1.

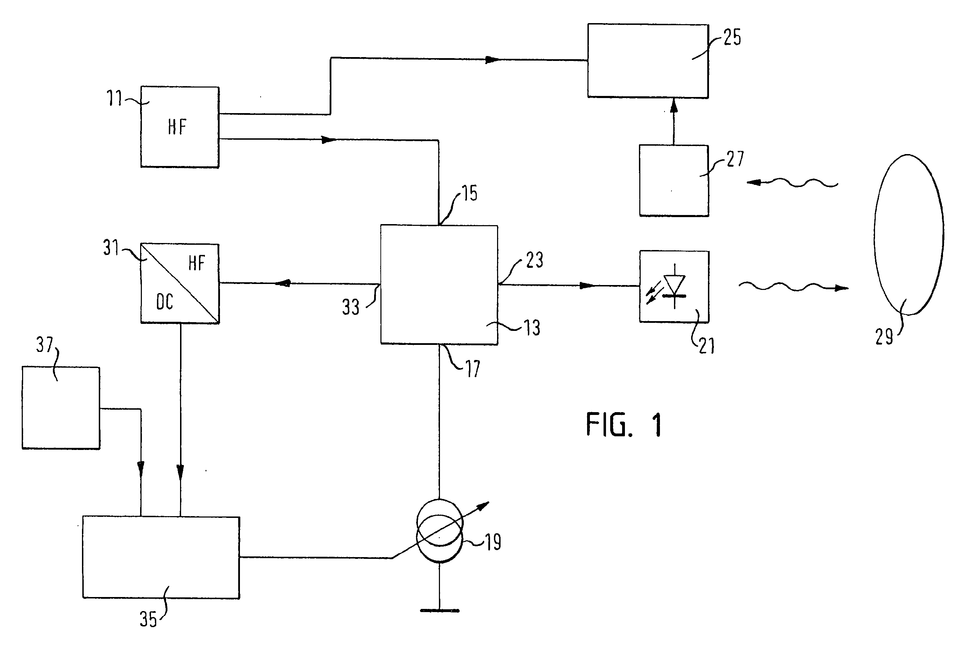

Fig. 1 zeigt den prinzipiellen Aufbau eines optoelektronischen Sensors zur Abstandsmessung anhand einer Phasenverschiebung von Reflexionslicht bezüglich der Phasenlage des modulierten Sendelichts.

Dieser Sensor besitzt einen Hochfrequenzgenerator 11, der ein sinusförmiges HF-Steuersignal mit einer Frequenz von beispielsweise 100 MHz erzeugt und dieses HF-Steuersignal an eine Modulationsschaltung 13 übermittelt. Zu diesem Zweck ist der Hochfrequenzgenerator 11 mit einem Eingang 15 der Modulationsschaltung 13 verbunden.

Die Modulationsschaltung 13 wird über einen Eingang 17 von einer regelbaren Stromquelle 19 gespeist. Die Modulationsschaltung 13 erzeugt ein Lichtsendesteuersignal, das mit der Frequenz des HF-Steuersignals des Hochfrequenzgenerators 11 moduliert ist und das eine Lichtsendeamplitude besitzt, die über die Steilheit der verwendeten Transistoren mit der Stromstärke des von der Stromquelle 19 gelieferten Stroms verknüpft ist. Dieses Lichtsendesteuersignal wird an einen Lichtsender 21, beispielsweise eine Laserdiode übermittelt. Zu diesem Zweck ist der Lichtsender 21 mit einem ersten Ausgang 23 der Modulationsschaltung 13 gekoppelt.

Ferner besitzt der Sensor eine Auswerteschaltung 25, die eingangsseitig mit einem Lichtempfänger 27, beispielsweise einer Fotodiode verbunden ist.

Der in Fig. 1 gezeigte Sensor vermag auf folgende Weise den Abstand zu einem - in Fig. 1 schematisch gezeigten - Objekt 29 zu ermitteln:

Der Lichtsender 21 emittiert Sendelicht, das gemäß der Frequenz des Hochfrequenzgenerators 11 moduliert ist, in Richtung des Objekts 29. Ein Teil dieses Sendelichts wird zurückreflektiert und kann dadurch mittels des Lichtempfängers 27 erfasst werden, der ein entsprechendes Empfangssignal erzeugt und an die Auswerteschaltung 25 weiterleitet.

Da die Auswerteschaltung 25 sowohl mit dem Lichtempfänger 27 als auch mit dem Hochfrequenzgenerator 11 verbunden ist, kann die Auswerteschaltung 25 die Abweichung der Phasenlage des von dem Lichtempfänger 27 empfangenen Reflexionslichts von der Phasenlage des von dem Lichtsender 21 ausgesandten Sendelichts ermitteln. Diese Phasenverschiebung steht - über die Lichtgeschwindigkeit - in einer bekannten Beziehung zu dem Abstand des Objekts 29 von dem Lichtsender 21 und dem Lichtempfänger 27. Aus dieser Beziehung kann die Auswerteschaltung 25 den gesuchten Abstand ermitteln.

Erfindungsgemäß ist eine Regelungsschaltung vorgesehen, um zu gewährleisten, dass die Lichtsendeamplitude des von der Modulationsschaltung 13 an den Lichtsender 21 übermittelten Lichtsendesteuersignals konstant bleibt. Diese Regelungsschaltung weist einen Gleichrichter 31 auf, der eingangsseitig mit einem zweiten Ausgang 33 der Modulationsschaltung 13 verbunden ist. Der Gleichrichter 31 ist zur Übermittlung eines Amplituden-Ist-Werts ausgangsseitig mit einem Regler 35 verbunden. Der Regler 35 ist zum Empfang eines Amplituden-Soll-Werts an eine Eingabeeinrichtung 37 angeschlossen. Ausgangsseitig ist der Regler 35 mit der regelbaren Stromquelle 19 verbunden, um an diese ein Stellsignal übermitteln zu können.

Die erläuterte Regelungsschaltung mit dem Gleichrichter 31, der Eingabeeinrichtung 37, dem Regler 35 und der regelbaren Stromquelle 19 dient zur Regelung der Stromstärke des von der Stromquelle 19 in die Modulationsschaltung 13 eingespeisten Stroms, und somit zur Regelung der Lichtsendeamplitude des von der Modulationsschaltung 13 an den Lichtsender 21 übermittelten modulierten Lichtsendesteuersignals.

Zu diesem Zweck liegt an dem zweiten Ausgang 33 der Modulationsschaltung 13 ein Amplitudenkontrollsignal an, das proportional zu dem am ersten Ausgang 23 der Modulationsschaltung 13 anliegenden Lichtsendesteuersignal ist, wie nachfolgend noch erläutert wird.

Der Gleichrichter 31 wandelt dieses Amplitudenkontrollsignal in einen Amplituden-Ist-Wert um, der durch ein Gleichspannungssignal gebildet ist, das dem zeitlichen Mittelwert des Lichtsendesteuersignals entspricht. Der Gleichrichter 31 weist hierfür zwei Dioden in einer temperaturkompensierten Anordnung auf.

Der Amplituden-Ist-Wert des Gleichrichters 31 wird dem Regler 35 zugeführt. Ebenso wird dem Regler 35 über die Eingabeeinrichtung 37 ein Amplituden-Soll-Wert in Form eines Gleichspannungssignals übermittelt. Aufgrund der Abweichung des Amplituden-Ist-Werts von dem Amplituden-Soll-Wert erzeugt der Regler 35 ein Stellsignal, das an die regelbare Stromquelle 19 weitergeleitet wird. Der Regler 35 kann zu diesem Zweck beispielsweise einen Differenzverstärker aufweisen.

In Abhängigkeit von dem Stellsignal wird somit die Stromstärke des von der Stromquelle 19 gelieferten Stroms verändert. Die erläuterte Regelungsschaltung gewährleistet dadurch eine permanente Anpassung der Amplitude des von der Modulationsschaltung 13 an den Lichtsender 21 übermittelten Lichtsendesteuersignals an einen über die Eingabeeinrichtung 37 vorgegebenen oder vorgebbaren Soll-Wert. Somit werden Fehlmessungen vermieden, die dadurch entstehen könnten, dass die Auswerteschaltung 25 eine durch Umgebungsbedingungen veränderte Amplitude des Empfangssignals erhält, die den notwendigen Signal-Rausch-Abstand nicht einhält.

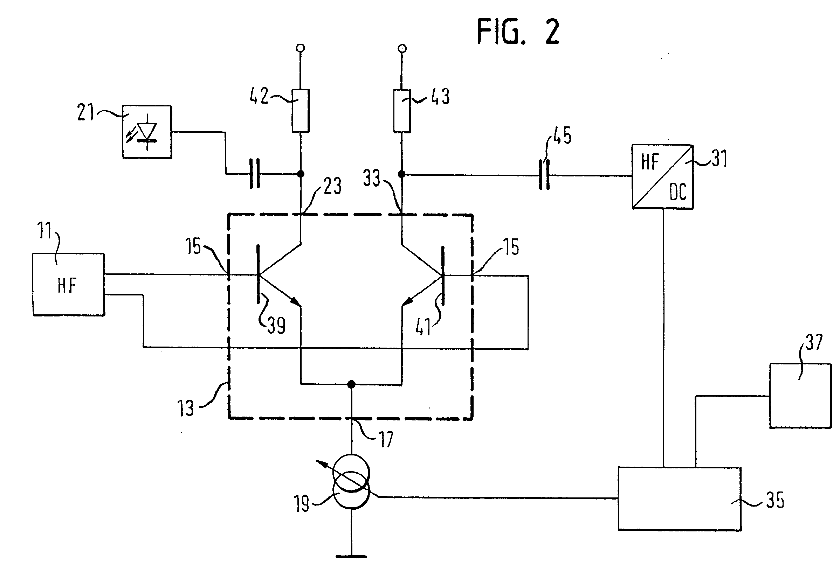

Fig. 2 zeigt Teile des Sensors gemäß Fig. 1, und insbesondere den schematischen Aufbau der Modulationsschaltung 13.

Die Modulationsschaltung 13 besitzt eine Differenzverstärkerschaltung, die in zwei Äste unterteilt ist. Einem Ast ist ein erster Transistor 39 zugeordnet, und dem anderen Ast ist ein zweiter Transistor 41 zugeordnet. Die Basen der beiden Transistoren 39, 41 bilden den Eingang 15 der Modulationsschaltung 13 und sind somit mit dem Hochfrequenzgenerator 11 verbunden. Die Differenzverstärkerschaltung besitzt somit einen symmetrischen Eingang.

Die Emitter der beiden Transistoren 39, 41 sind gemeinsam mit der regelbaren Stromquelle 19 verbunden. Der Kollektor des ersten Transistors 39 ist mit einem Kollektorwiderstand 42 verbunden und bildet den ersten Ausgang 23 der Modulationsschaltung 13 zur Übermittlung des Lichtsendesteuersignals an den Lichtsender 21. Der Kollektor des zweiten Transistors 41 ist mit einem Kollektorwiderstand 43 verbunden, wobei zwischen dem Kollektor und dem Kollektorwiderstand 43, nämlich an dem zweiten Ausgang 33 der Modulationsschaltung 13, über einen Koppelkondensator 45 die Regelungsschaltung mit dem Gleichrichter 31, der Eingabeeinrichtung 37 und dem Regler 35 anliegt.

Die erläuterte Ausbildung der Modulationsschaltung 13 mit dem ersten Transistor 39 bewirkt, dass die Amplitude des Lichtsendesteuersignals in einer festen Beziehung zu dem von der Stromquelle 19 gelieferten Strom steht, wobei die dem Lichtsender 21 zugeführte Stromstärke durch das dem ersten Transistor 39 zugeführte HF-Steuersignal moduliert wird. Die Amplitude des somit dem Lichtsender 21 zugeführten Lichtsendesteuersignals wird dabei durch die Stromquelle 19 vorgegeben.

Die Ausbildung der Modulationsschaltung 13 als Differenzverstärker mit einem parallelen Ast mit dem zweiten Transistor 41 bewirkt, dass an dem zweiten Ausgang 33 der Modulationsschaltung 13 ein Amplitudenkontrollsignal anliegt, das bezüglich des am ersten Ausgang 23 anliegenden Lichtsendesteuersignals um eine Phasenverschiebung von 180° gedreht ist und somit in einer definierten Beziehung zu dem Lichtsendesteuersignal des Lichtsenders 21 steht. Das Amplitudenkontrollsignal an dem zweiten Ausgang 33 der Modulationsschaltung 13 kann somit als Grundlage für die erläuterte Regelung der Amplitude des Lichtsendesteuersignals dienen.

Alternativ zu dem in Fig. 2 gezeigten Aufbau der Modulationsschaltung 13 kann die Differenzverstärkerschaltung auch einen unsymmetrischen Eingang aufweisen.

### Bezugszeichenliste

- 11: Hochfrequenzgenerator
- 13: Modulationsschaltung
- 15: Eingang der Modulationsschaltung
- 17: Eingang der Modulationsschaltung
- 19: Stromquelle
- 21: Lichtsender
- 23: erster Ausgang der Modulationsschaltung
- 25: Auswerteschaltung
- 27: Lichtempfänger
- 29: Objekt
- 31: Gleichrichter
- 33: zweiter Ausgang der Modulationsschaltung
- 35: Regler
- 37: Eingabeeinrichtung
- 39: erster Transistor
- 41: zweiter Transistor
- 42: Kollektorwiderstand
- 43: Kollektorwiderstand
- 45: Koppelkondensator

## Patentansprüche

1. Optoelektronischer Sensor zur Abstandsmessung anhand einer Phasenverschiebung von Reflexionslicht eines modulierten Sendelichtstrahls,
- mit einem Lichtsender (21) zum Aussenden von Sendelicht, das gemäß einem Lichtsendesteuersignal moduliert ist,
- einem Hochfrequenzgenerator (11) zur Erzeugung eines HF-Steuersignals, und
- einer Modulationsschaltung (13) zur Erzeugung des Lichtsendesteuersignals mit der Frequenz des HF-Steuersignals und mit einer einstellbaren Lichtsendeamplitude,
- wobei zur Übermittlung des HF-Steuersignals der Hochfrequenzgenerator (11) mit einem Eingang (15) der Modulationsschaltung (13) verbunden ist,
- wobei die Modulationsschaltung einen ersten (39) und einen zweiten (41) Transistor aufweist, wobei die Transistoren durch das HF-Steuersignal angesteuert werden und der erste Transistor (39) einen ersten Ausgang (23) und der zweite Transistor (41) einen von dem ersten Ausgang verschiedenen zweiten Ausgang (33) der Modulationsschaltung bildet,
- wobei zum Einstellen der Lichtsendeamplitude eine regelbare Stromquelle (19) mit der Modulationsschaltung (13) verbunden ist,
- wobei zur Übermittlung des Lichtsendesteuersignals der erste Ausgang (23) der Modulationsschaltung (13) mit dem Lichtsender (21) verbunden ist,
- wobei zur Übermittlung eines Amplitudenkontrollsignals der zweite Ausgang (33) der Modulationsschaltung (15) mit einer Regelungsschaltung (31, 35, 37) verbunden ist,
- wobei das Amplitudenkontrollsignal in einem proportionalen Verhältnis zu der Amplitude des Lichtsendesteuersignals steht,
- wobei zur Regelung der Lichtsendeamplitude die Regelungsschaltung mit der Stromquelle (19) verbunden ist, und
- wobei der Sensor eine Auswerteschaltung (25) aufweist zur Ermittlung des Abstands des Sensors von einem Objekt (29) anhand der Phasenverschiebung von an dem Objekt reflektiertem Sendelicht bezüglich der Phasenlage des HF-Steuersignals.

2. Optoelektronischer Sensor nach Anspruch 1,
**dadurch gekennzeichnet,**
**dass** die Regelungsschaltung einen Gleichrichter (31) aufweist zur Umwandlung des hochfrequent modulierten Amplitudenkontrollsignals in einen Amplituden-Ist-Wert,
wobei der Amplituden-Ist-Wert vorzugsweise durch ein Gleichspannungssignal gebildet ist.

3. Optoelektronischer Sensor nach Anspruch 2,
**dadurch gekennzeichnet,**
**dass** der Gleichrichter (31) wenigstens eine Diode, vorzugsweise zwei Dioden in einer temperaturkompensierten Anordnung aufweist.

4. Optoelektronischer Sensor nach einem der vorhergehenden Ansprüche,
**dadurch gekennzeichnet,**
**dass** die Regelungsschaltung einen Regler (35) zur Erzeugung eines Stellsignals in Abhängigkeit von der Abweichung eines Amplituden-Ist-Werts von einem Amplituden-Soll-Wert aufweist,
wobei der Regler (35) vorzugsweise zur Übermittlung eines Stellsignals mit der Stromquelle (19) verbunden ist.

5. Optoelektronischer Sensor nach einem der vorhergehenden Ansprüche,
**dadurch gekennzeichnet,**
**dass** die Regelungsschaltung eine Eingabeeinrichtung (37) zur Eingabe oder Erzeugung eines Amplituden-Soll-Werts aufweist.

6. Optoelektronischer Sensor nach einem der vorhergehenden Ansprüche,
**dadurch gekennzeichnet,**
**dass** die Modulationsschaltung (13) zur Erzeugung des Lichtsendesteuersignals und des Amplitudenkontrollsignals eine Differenzverstärkerschaltung aufweist, die eingangsseitig von dem HF-Steuersignal beaufschlagt wird,
wobei die Differenzverstärkerschaltung vorzugsweise einen symmetrischen Eingang (15) aufweist.

7. Optoelektronischer Sensor nach Anspruch 6,
**dadurch gekennzeichnet,**
**dass** die Differenzverstärkerschaltung zwei Äste aufweist,
wobei jeder Ast einen Verstärkungstransistor aufweist (39, 41), und/oder wobei einem Ast ein erster Ausgang (23) und dem anderen Ast ein zweiter Ausgang (33) der Modulationsschaltung (13) zugeordnet ist, und/oder
wobei beide Äste von einer gemeinsamen regelbaren Stromquelle (19) gespeist werden.

8. Optoelektronischer Sensor nach einem der vorhergehenden Ansprüche,
**dadurch gekennzeichnet,**
**dass** der Lichtsender (21) eine Laserdiode aufweist,
und/oder
**dass** der Sensor einen Lichtempfänger (27), insbesondere eine Fotodiode, aufweist zum Empfangen von an einem Objekt (29) reflektiertem Sendelicht.

## Claims

1. An optoelectronic sensor for distance measurement with reference to a phase shift of reflected light of a modulated transmitted light beam,
- comprising a light transmitter (21) for the transmission of transmitted light modulated in accordance with a light transmission control signal;
- a radio frequency generator (11) for the generation of a RF control signal; and
- a modulation circuit (13) for the generation of the light transmission control signal with the frequency of the RF control signal and with an adjustable light transmission amplitude,
- wherein, for the transmission of the RF control signal, the radio frequency generator (11) is connected to an input (15) of the modulation circuit (13);
- wherein the modulation circuit has a first transistor (39) and a second transistor (41), with the transistors being controlled by the RF control signal and the first transistor (39) forming a first output (23) of the modulation circuit and the second transistor (41) forming a second output (33) of the modulation circuit different from the first output;
- wherein, a controllable power source (19) is connected to the modulation circuit (13) for the adjustment of the light transmission amplitude;
- wherein the first output (23) of the modulation circuit (13) is connected to the light transmitter (21) for the transmission of the light transmission control signal;
- wherein the second output (33) of the modulation circuit (15) is connected to a control circuit (31, 35, 37) for the transmission of an amplitude control signal;
- wherein the amplitude control signal is in a proportional relationship with the amplitude of the light transmission control signal;
- wherein the control circuit is connected to the power source (19) for the control of the light transmission amplitude; and
- wherein the sensor has an evaluation circuit (25) for the determination of the distance of the sensor from an object (29) with reference to the phase shift of transmitted light reflected at the object with respect to the phase position of the RF control signal.

2. An optoelectronic sensor in accordance with claim 1, **characterized in that** the control circuit has a rectifier (31) for the conversion of the radio frequency modulated amplitude control signal into an actual amplitude value, with the actual amplitude value preferably being formed by a DC voltage signal.

3. An optoelectronic sensor in accordance with claim 2, **characterized in that** the rectifier (31) has at least one diode, preferably two diodes, in a temperature-compensated arrangement.

4. An optoelectronic sensor in accordance with any one of the preceding claims, **characterized in that** the control circuit has a control (35) for the generation of a setting signal in dependence on the deviation of an actual amplitude value from a desired amplitude value, with the control (35) preferably being connected to the power source (19) for the transmission of a setting signal.

5. An optoelectronic sensor in accordance with any one of the preceding claims, **characterized in that** the control circuit has an input device (37) for the input or generation of a desired amplitude value.

6. An optoelectronic sensor in accordance with any one of the preceding claims, **characterized in that** the modulation circuit (13) has a differential amplifier circuit for the generation of the light transmission control signal and of the amplitude control signal, said differential amplifier circuit being acted on by the RF control signal at the input side, with the differential amplifier circuit preferably having a symmetrical input (15).

7. An optoelectronic sensor in accordance with claim 6, **characterized in that** the differential amplifier circuit has two branches, with each branch having an amplifier transistor (39, 41) and/or with a first output (23) of the modulation circuit (13) being associated with one branch and a second output (33) of the modulation circuit (13) being associated with the other branch and/or with both branches being fed by a common, controllable power source (19).

8. An optoelectronic sensor in accordance with any one of the preceding claims, **characterized in that** the light transmitter (21) has a laser diode; and/or **in that** the sensor has a light receiver (27), in particular a photodiode, for the reception of transmitted light reflected at an object (29).

## Revendications

1. Capteur optoélectronique pour mesurer la distance à l'aide d'un décalage de phase de lumière réfléchie d'un rayon lumineux émetteur,
- comportant un émetteur de lumière (21) pour émettre de la lumière émise, qui est modulée selon un signal de commande d'émission de lumière,
- un générateur à haute fréquence (11) pour engendrer un signal de commande HF, et
- un circuit de modulation (13) pour engendrer le signal de commande de lumière émise avec la fréquence du signal de commande HF et avec une amplitude d'émission de lumière réglable,
- dans lequel le générateur de haute fréquence (11) est relié à une entrée (15) du circuit de modulation (13) pour transmettre le signal de commande HF,
- dans lequel le circuit de modulation présente un premier transistor (39) et un deuxième transistor (41), les transistors étant pilotés par le signal de commande HF, et le premier transistor (39) formant une première sortie (23) et le deuxième transistor (41) formant une deuxième sortie (33) du circuit de modulation, différente de la première sortie,
- dans lequel une source de courant (19) réglable est reliée au circuit de modulation (13) pour régler l'amplitude d'émission de lumière,
- dans lequel la première sortie (23) du circuit de modulation (13) est reliée à l'émetteur de lumière (21) pour transmettre le signal de commande d'émission de lumière,
- dans lequel la deuxième sortie (33) du circuit de modulation (15) est reliée à un circuit de régulation (31, 35, 37) pour transmettre un signal de contrôle d'amplitude,
- dans lequel le signal de contrôle d'amplitude est en rapport proportionnel à l'amplitude du signal de commande d'émission de lumière,
- dans lequel le circuit de régulation est relié à la source de courant (19) pour réguler l'amplitude d'émission de lumière, et
- dans lequel le capteur présente un circuit d'évaluation (25) pour déterminer la distance du capteur par rapport à un objet (29) à l'aide du décalage de phase de lumière émise réfléchie sur l'objet par rapport à la position de phase du signal de commande HF.

2. Capteur optoélectronique selon la revendication 1,
**caractérisé en ce que**
le circuit de régulation présente un redresseur (31) pour transformer le signal de contrôle d'amplitude modulé à haute fréquence en une valeur réelle d'amplitude,
la valeur réelle d'amplitude étant formée de préférence par un signal à tension continue.

3. Capteur optoélectronique selon la revendication 2,
**caractérisé en ce que**
le redresseur (31) présente au moins une diode, de préférence deux diodes dans un agencement à compensation de température.

4. Capteur optoélectronique selon l'une des revendications précédentes,
**caractérisé en ce que**
le circuit de régulation présente un régleur (35) pour engendrer un signal de réglage en fonction de la déviation d'une valeur réelle d'amplitude par rapport à une valeur de consigne d'amplitude,
le régulateur (35) étant de préférence relié à la source de courant (19) pour transmettre un signal de réglage.

5. Capteur optoélectronique selon l'une des revendications précédentes,
**caractérisé en ce que**
le circuit de régulation présente des moyens d'entrée (37) pour entrer ou engendrer une valeur de consigne d'amplitude.

6. Capteur optoélectronique selon l'une des revendications précédentes,
**caractérisé en ce que**
le circuit de modulation (13) présente, pour engendrer le signal de commande d'émission de lumière et le signal de contrôle d'amplitude, un circuit amplificateur différentiel qui est attaqué en entrée par le signal de commande HF,
le circuit amplificateur différentiel présentant de préférence une entrée symétrique (15).

7. Capteur optoélectronique selon la revendication 6,
**caractérisé en ce que**
le circuit amplificateur différentiel présente deux branches,
chaque branche présentant un transistor d'amplificateur (39, 41),
et/ou à une branche est associée une première sortie (23) et à l'autre branche est associée une deuxième sortie (33) du circuit de modulation (13), et/ou
les deux branches étant alimentées par une source de courant (19) commune réglable.

8. Capteur optoélectronique selon l'une des revendications précédentes,
**caractérisé en ce que**
l'émetteur de lumière (21) présente une diode laser,
et/ou
**en ce que** le capteur présente un récepteur de lumière (27), en particulier une photodiode pour recevoir de la lumière émise réfléchie sur un objet (29).
